# EUROPÄISCHE PATENTANMELDUNG

(11) **EP 0 837 346 A1**
(43) Veröffentlichungstag der Anmeldung: **22.04.1998**
(21) Anmeldenummer: 96810698.9
(22) Anmeldetag: 18.10.1996
(51) Int. Cl.: G02B 6/38, G02B 6/44

(54) **Steckmodul für Lichtwellenleiterkabel**

(71) Anmelder: HUBER & SUHNER AG, 9100 Herisau (CH)
(72) Erfinder: Koller, Hansruedi, 9127 St. Peterzell (CH); Schmalzigaug, Thomas, 9016 St. Gallen (CH)
(74) Vertreter: Schick, Carl

(57) **Zusammenfassung**

Das Steckmodul mit Spleissträger (21) oder Aufnehmer für die Enden von Kommunikationssystemkabeln ist mit Koppel-Mitteln zum aussenseitigen Koppeln von Kabeln an die sich im Innern des Steckmoduls befindenden Enden von inneren Kabeln mit Hilfe von lösbaren Verbindungselementen vorgesehen. Die Koppel-Mittel umfassen zwei Schienen (24; 25) für innere Stecker (26; 27), die mit je einem Ende eines inneren Kabels (28) verbunden sind, derart, dass eine nachträgliche Montage eines Kupplungsstücks auf einem inneren Stecker möglich (26; 27) ist. Daraus ergibt sich der Vorteil, dass nur so viele Kupplungsstücke und/oder nur so viele innere Stecker (26; 27) montiert werden müssen, wie sie für eine bestimmte Anwendung notwendig sind.

## Beschreibung

Die vorliegende Erfindung betrifft ein Steckmodul nach dem Oberbegriff des Patentanspruchs 1.

In vielen Bereichen der Kommunikationstechnik werden optische bzw. elektrooptische Einschubeinheiten eingesetzt, die mit Lichtleiter-Steckern versehen sind, um wahlweise Kopplungen zusammenzusetzen. Solche Einschubeinheiten, die auch Steckmodule genannt werden, weisen häufig frontseitig eine Vielzahl von Verbindungselementen auf, an die externe Verbinder anschliessbar sind. Wegen der Vielzahl der benötigten Verbindungselemente sind derartige Steckmodule relativ aufwendig.

Es ist daher Aufgabe der vorliegenden Erfindung, ein Steckmodul dieser Art zu schaffen, das weniger aufwendig ist.

Diese Aufgabe wird durch ein Steckmodul mit den im kennzeichnenden Teil des Patentanspruchs 1 angegebenen Merkmalen gelöst.

Weitere vorteilhafte Ausgestaltungen der Erfindung sind in den abhängigen Ansprüchen angegeben.

Die Erfindung wird nachfolgend beispielsweise anhand einer Zeichnung näher erläutert. Es zeigen:
- Fig. 1: eine an einer Frontplatte eines Steckmoduls montierbare symmetrische Kupplung,
- Fig. 2 und 3: je einen in diese Kupplung einsteckbaren Stecker,
- Fig. 4 bis 6: eine Seitenansicht, eine Draufsicht und eine vordere Ansicht eines erfindungsgemässen Steckmoduls mit allen inneren Steckern, aber ohne Kupplungen,
- Fig. 7: eine Seitenansicht einer erfindungsgemässen Schiene zu einem solchen Steckmodul,
- Fig. 8: eine Draufsicht auf diese Schiene,
- Fig. 9 bis 11: eine Seitenansicht, eine Draufsicht und eine vordere Ansicht eines Steckmoduls mit allen inneren Steckern und symmetrischen Kupplungen, aber ohne äussere Stecker,
- Fig. 12 und 13: eine Seitenansicht und eine Draufsicht eines Steckmoduls mit allen inneren Steckern und symmetrischen Kupplungen, sowie mit allen äusseren Steckern,
- Fig. 14 bis 16: eine Seitenansicht, eine Draufsicht und eine vordere Ansicht eines Steckmoduls mit allen inneren Steckern und Hybridkupplungen, aber ohne äussere Stecker,
- Fig. 17 bis 19: eine Seitenansicht, eine Draufsicht und eine vordere Ansicht eines Steckmoduls mit allen inneren Steckern und Hybridkupplungen, sowie mit allen äusseren Steckern.

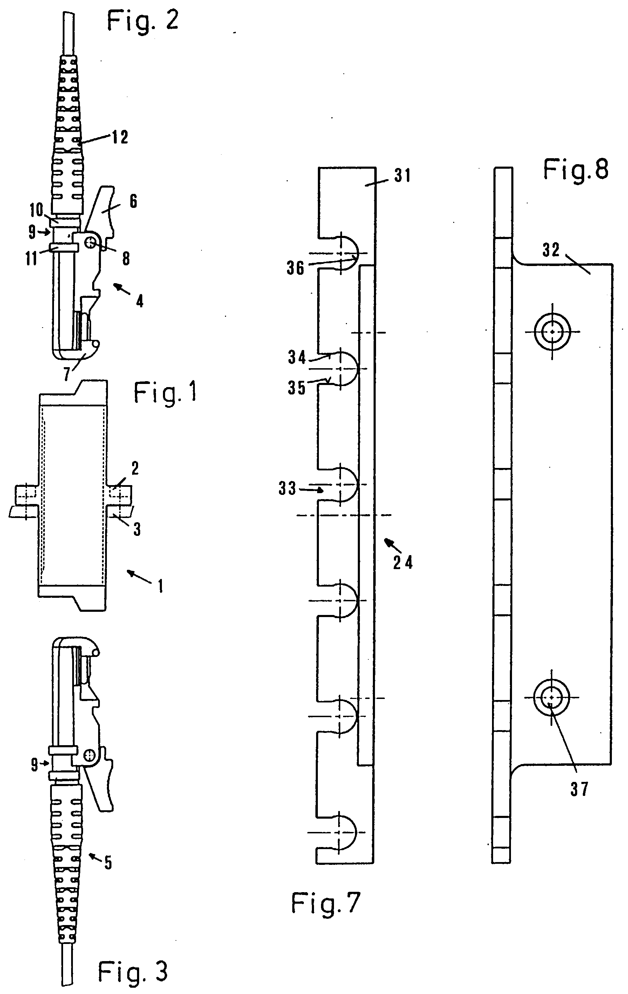

Die sogenannte symmetrische Kupplung 1 nach Fig. 1, welche in ihrem mittleren Bereich einen Flansch 2 aufweist, ist durch eine Öffnung einer Frontplatte 3 geführt, an der sie über den Flansch 2 befestigt werden kann. Der Stecker 4 nach Fig. 2 kann an der einen Seite und der Stecker 5 nach Fig. 3 an der anderen Seite der Kupplung 1 eingesteckt werden. Die Stecker 4 und 5, die beispielsweise vom selben Typ sein können, weisen vorzugsweise einen Entriegelungshebel 6 und eine endseitige seitlich schwenkbare Schutzkappe 7 auf. Solche normierten Kupplungen und Stecker sind an sich bekannt. Sie sind derart ausgebildet, dass beim Einführen des Steckers in der Kupplung die Schutzkappe 7 durch die Wirkung einer kleinen inneren Führung der Kupplung geschwenkt wird, um das Ende des Steckers zu befreien und den optischen Kontakt zu ermöglichen.

Im Bereich der Achse 8 des Hebels 6, jedoch an der entgegengesetzten Seite ist in der Ausführung nach Fig. 2 eine zylindrische Einschnürung 9 zwischen zwei zumindest angenähert ringförmig ausgebildeten Verdickungen 10 und 11 vorhanden.

Die Stecker weisen eine Knickschutztülle 12 auf, um die Lichtleitung oder das optische Kabel zu schützen.

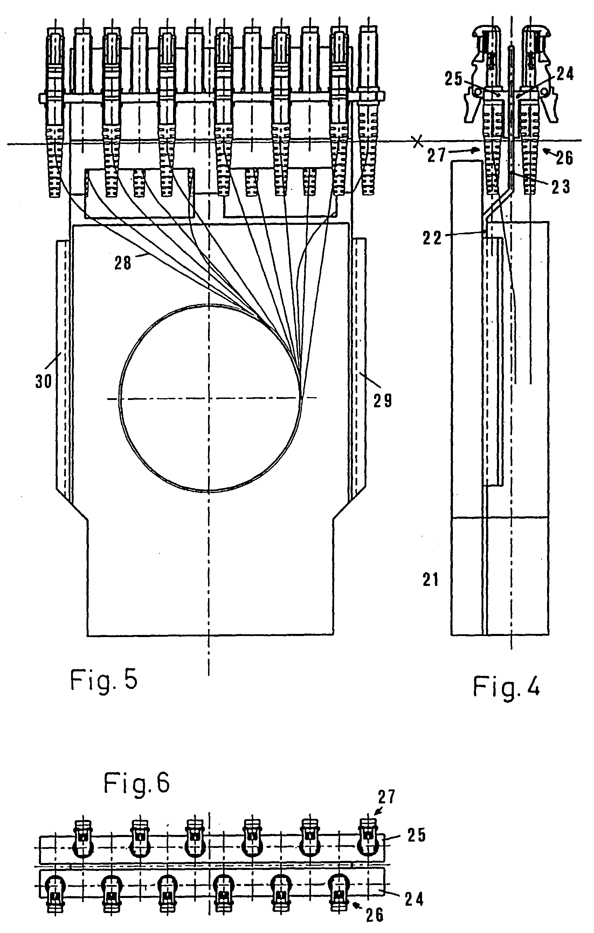

Das Steckmodul nach den Figuren 4 bis 6 weist einen Spleissträger 21 auf, an dem eine Trägerplatte 22 montiert ist, die oben in den Figuren 4 und 5 aus dem Spleissträger 21 herausragt. Zweckmässigerweise kann die Trägerplatte 22, wie in Fig. 1 dargestellt, zweimal abgewinkelt sein, um den Trägerbereich 23 der Trägerplatte 22 auf eine höher liegende zum Spleissträger 21 parallel verlaufende Ebene zu versetzen. Der Spleissträger 21 kann Mittel zum Spleissen der Enden (pigtails) von Kabeln aufweisen.

Im Trägerbereich 23 sind zwei vorzugsweise senkrecht zur Trägerebene verlaufende Schienen 24, 25 angeordnet, die Öffnungen aufweisen, in denen die Einschnürungen 9 der einzelnen inneren Stecker einrasten. Im Beispiel nach Fig. 4 bis 6 sind sechs solche innere Stecker 26 auf der oberen Seite des Trägerbereichs 23 und sechs weitere innere Stecker 27 auf der unteren Seite des Trägerbereichs 23 angeordnet. Fig. 6 zeigt, dass die Schienen 24, 25 kammförmig ausgebildet sind und runde Öffnungen aufweisen, in die jeweils ein Stecker 26, 27 einklemmbar ist (Presspassung). Mit diesen inneren Steckern sind jeweils die Enden der Lichtleitungen 28 verbunden. Die in den Figuren dargestellten Kabelwindungen 28 stellen eine Reservelänge für die zu spleissenden Kabelenden dar. Der Spleissträger 22 weist Führungen 29, 30 für den Einschub in ein System auf.

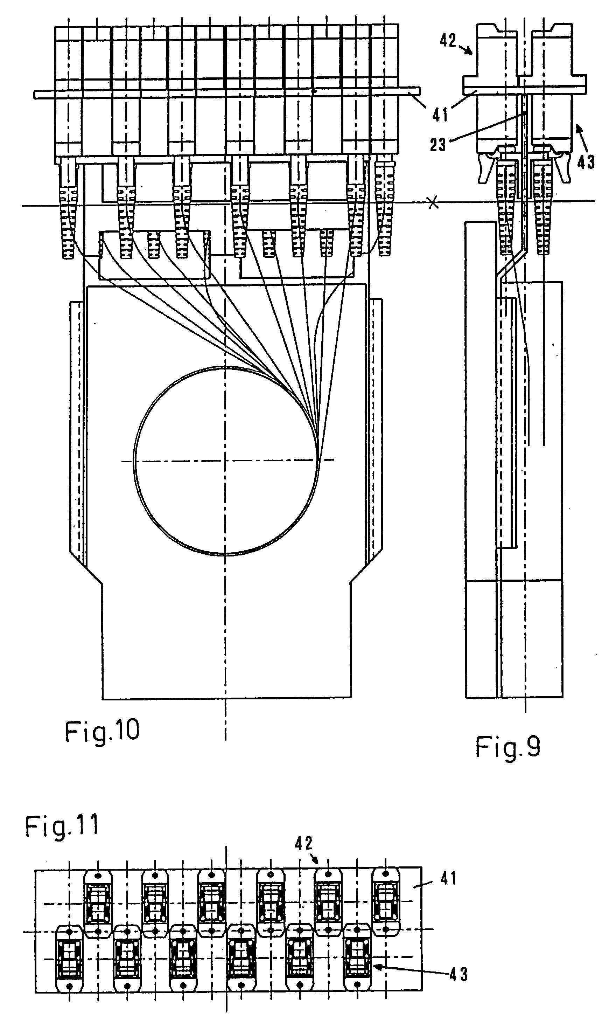

Fig. 7 und 8 zeigen eine Schiene 24 mit zwei länglichen Stegen 31, 32, die ein L-Profil bilden. Der längere Steg 31 weist sechs stirnseitige durch zwei parallele Wände 34, 35 und eine angenähert halbkreisförmig ausgebildete Zylinderfläche 36 definierte Öffnungen 33 auf, wobei der Durchmesser der Zylinderfläche 36 etwas grösser als der Abstand zwischen den Wänden 34 und 35 ist, so dass sich ein Klemmeffekt beim Einführen der Stecker im Bereich der Einschnürung 9 (Fig. 2) ergibt, da sie vorzugsweise eine aussenseitige etwas elastische Hülle aufweisen. Der kürzere Steg 32 ist mit zwei Bohrungen 37 zur Montierung der Schiene 24 an der Trägerplatte 22, wie in Fig. 6 dargestellt, versehen.

Fig. 9 und 10 zeigen, dass im Endbereich des Trägerbereichs 23 eine vorzugsweise senkrecht zur Trägerebene verlaufende Frontplatte 41 angeordnet ist, die Öffnungen aufweist, durch welche in an sich bekannter Weise jeweils eine symmetrische Kupplung 42, 43 geführt ist.

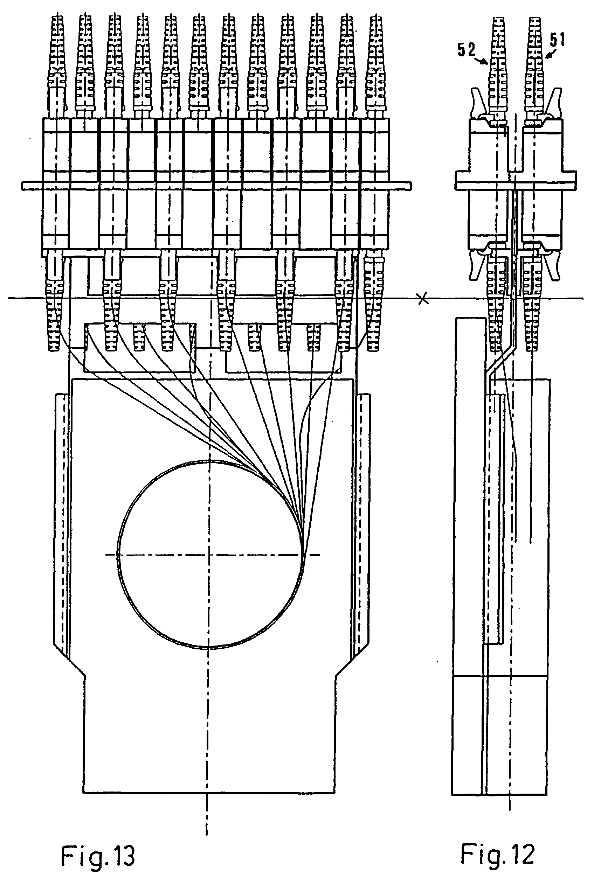

In Fig. 11 sind die Öffnungen sichtbar, die die symmetrischen Kupplungen 42, 43 aufweisen, um dort die äusseren Stecker 51, 52 einzustecken, wie in Fig. 12 und 13 dargestellt.

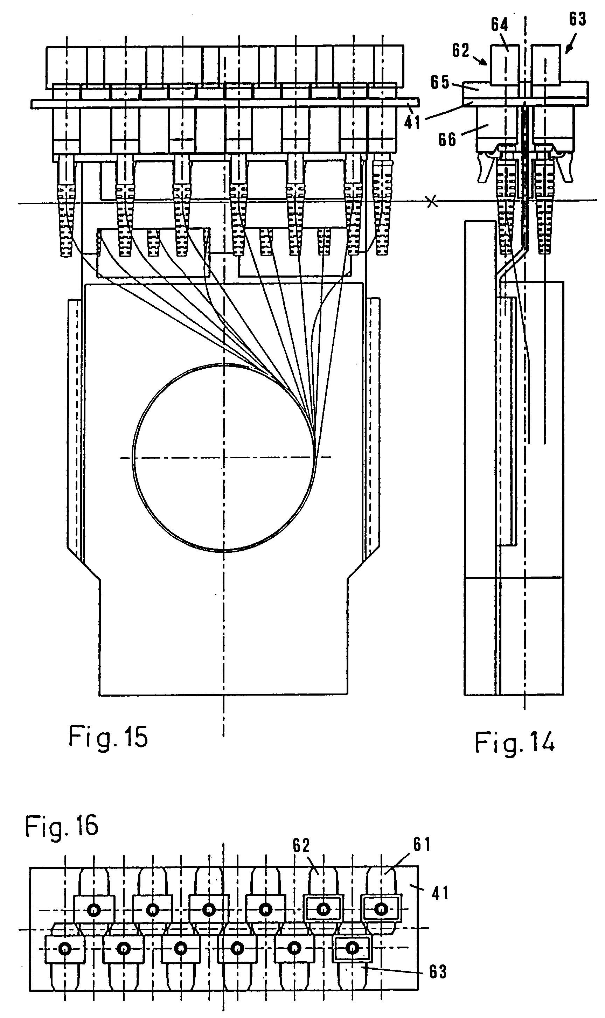

Fig. 14 bis 16 zeigen, dass an derselben Frontplatte 41 auch sogenannte Hybridkupplungen 62, 63 montierbar sind, um verschiedenartige Stecker an beiden Seiten der Hybridkupplung aufnehmen zu können. In Fig. 16 ist zur Vereinfachung der Zeichnung nur bei drei Kupplungen 61, 62, 63 die stirnseitige Koppelöffnung deutlich dargestellt.

Fig. 14, 15 und 16 zeigen, wie auch die Hybridkupplungen 62, 63 teilweise durch Öffnungen an der Frontplatte 41 montiert sein können. Eine solche Kupplung 62, auch Kupplungsstück, Durchführungsstück oder Adapter genannt, weist zwei äussere Teile 64, 65 auf, von denen der Teil 65 sich stirnseitig gegen die Frontplatte 41 am Rand der Öffnung stützt, sowie einen inneren Teil 66, der durch die Öffnung der Frontplatte 41 ins Innere des Steckmoduls gelangt. Ein Stecker 4 oder 5 (Fig. 2 bzw. 3) kann somit an einen entsprechenden Steckanschluss der Kupplung angeschlossen und mit ihm verriegelt werden. Denn die Kupplungen haben je eine Öffnung für den Anschluss eines inneren und eines äusseren Steckers. Die Hebel 6 dienen zur Entriegelung der Kupplungen. Die Kupplungen unterstützen auch die mechanische Verbindung zwischen den inneren Steckern und der Frontplatte 41.

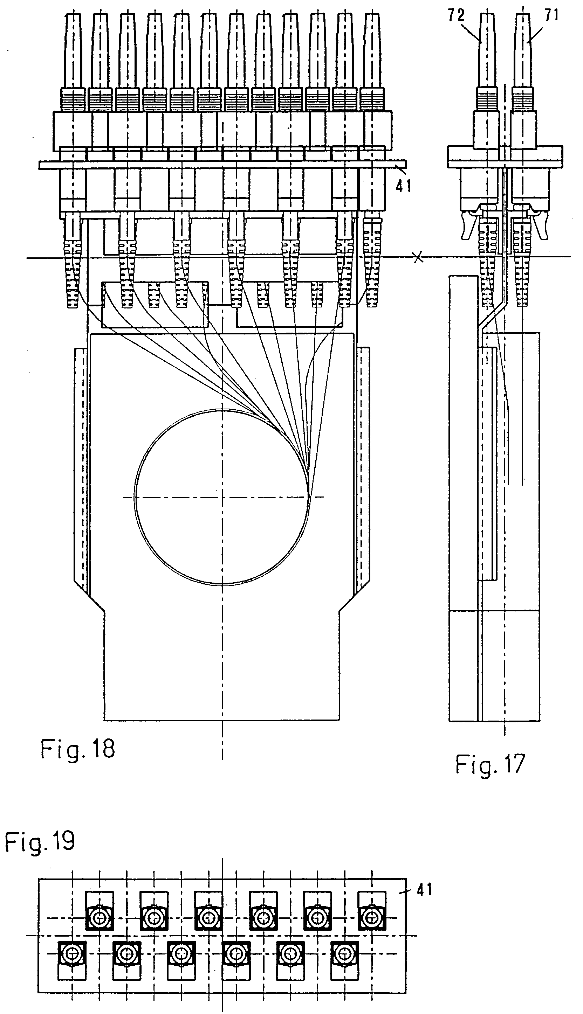

Fig. 17, 18 und 19 zeigen die äusseren Stecker 71, 72 in montiertem, das heisst jeweils in eingestecktem Zustand.

Die Figuren 12, 13 und 17, 18, 19 zeigen das Steckmodul vollständig mit symmetrischen Kupplungen bzw. mit Hybridkupplungen bestückt und ebenfalls vollständig mit äusseren Steckern 51, 52, 71, 72 belegt. Die äusseren Stecker sind mit in den Figuren nicht dargestellten Lichtleitern oder optischen Kabeln verbunden.

Der Vorteil der erfindungsgemässen Ausführung besteht darin, dass falls für eine bestimmte Anwendung nur wenige Anschlüsse erforderlich sind, von allen Anschlussmöglichkeiten, die das Steckmodul bietet, nur gerade die notwendige Anzahl Kupplungen montiert werden muss, was bei einer grossen Anzahl Geräte eine merkliche Materialeinsparung mit sich bringt. Dieser Vorteil ergibt sich auch bei Kommunikationssystemen mit elektrischen Kabeln.

Im Beispiel nach Fig. 6 sind die inneren Stecker 26 und 27 jeweils im Kamm 31 (Fig. 7) eingerastet, wobei auch andere Befestigungsmittel verwendet werden können.

Das Steckmodul nach diesem Beispiel ist zweireihig. Einreihige oder mehrreihige Steckmodule sind nach diesem Prinzip auch möglich.

Die Frontplatte kann auch einen oder mehrere längliche Schlitze statt Öffnungen aufweisen. Die Öffnungen können sonst beispielsweise rechteckig, rund, oval oder als Langloch ausgebildet sein.

Die äussere Partie der inneren Stecker 26, der Kupplungen 42, 62 und der äusseren Stecker 51, 71, bestehen vorzugsweise vorwiegend aus Kunststoff.

Als Verbindung zwischen der Trägerplatte 22 und der Frontplatte 41 können weitere L-Profile dienen.

Bei einem zweireihigen Steckmodul ist der Kamm 31 durch zwei L-Profile gebildet, deren Öffnungen 33 den Öffnungen der Frontplatte entsprechend versetzt sind.

Bei einem Steckmodul oder Kompaktmodul nach der Erfindung kann die sonst übliche Frontplatte 41 entfallen.

Die Erfindung bringt den zusätzlichen Vorteil mit sich, dass die Kupplung auch nur über die Rastung bzw. den Rastmechanismus des Steckers fixiert werden kann.

## Patentansprüche

1. Steckmodul mit Spleissträger oder Aufnehmer für die Enden von Kommunikationssystemkabeln, mit Koppel-Mitteln zum aussenseitigen Koppeln von Kabeln an die sich im Innern des Steckmoduls befindenden Enden von inneren Kabeln mit Hilfe von lösbaren Verbindungselementen, dadurch gekennzeichnet, dass diese Koppel-Mittel eine Halterungsvorrichtung (24; 25) für innere Stecker (26; 27) umfassen, die mit je einem Ende eines inneren Kabels (28) verbunden sind, derart, dass eine nachträgliche Montage eines Kupplungsstücks (42; 43; 62; 63) auf einem inneren Stecker möglich (26; 27) ist.

2. Steckmodul nach Anspruch 1, dadurch gekennzeichnet, dass eine nachträgliche Montage der Kupplung ausschliesslich unter Verwendung des Steckerrastmechanismus möglich ist.

3. Steckmodul nach Anspruch 1 oder 2, dadurch gekennzeichnet, dass nur so viele Kupplungsstücke (42; 43; 62; 63) und/oder nur so viele innere Stecker (26; 27) montiert werden, wie sie für eine bestimmte Anwendung notwendig sind.

4. Steckmodul nach einem der Ansprüche 1 bis 3, dadurch gekennzeichnet, dass die Halterungsvorrichtung (24) ein L-Profil mit einer ersten an einer Trägerplatte (22) montierten Partie (32) und einer zweiten senkrecht zu ihr angeordneten Partie (31) ist, die im Bereich ihrer oberen länglichen Kante Öffnungen (33) aufweist, die zur Halterung der inneren Stecker (26; 27)dienen.

5. Steckmodul nach einem der Ansprüche 1 bis 4, dadurch gekennzeichnet, dass eine Frontplatte (41) derart ausgebildete Öffnungen aufweist, dass dort Kupplungsstücke (42; 43; 62; 63) montierbar sind, die einen ersten Teil zum Anschliessen eines äusseren Steckers (51; 52; 71; 72) und einen zweiten Teil zum Anschliessen eines dieser inneren Stecker (26; 27) aufweisen.

6. Steckmodul nach Anspruch 5, dadurch gekennzeichnet, dass die Frontplatte (41) parallel zur Halterungsvorrichtung (24; 25) angeordnet ist, an der die inneren Stecker (26; 27) derart montiert sind, dass sie senkrecht zur Frontplatte (41) gerichtet und mit ihren Enden in einer Lage nahe einer Öffnung der Frontplatte angeordnet sind.

7. Steckmodul nach einem der Ansprüche 1 bis 6, dadurch gekennzeichnet, dass die Halterungsvorrichtung (24) Befestigungsmittel umfasst, um die inneren Stecker (26; 27) zu befestigen.

8. Steckmodul nach einem der Ansprüche 4 bis 7, dadurch gekennzeichnet, dass die inneren Stecker (26; 27) Einschnürungen (9) aufweisen, durch die sie in die Öffnungen der zweiten Partie (31) der Halterungsvorrichtung (24) einklemmbar sind.

9. Steckmodul nach einem der Ansprüche 1 bis 8, dadurch gekennzeichnet, dass die Frontplatte (41) mindestens zwei versetzte Reihen von Öffnungen aufweist, wobei mindestens zwei Schienen (24; 25) mit gegeneinander versetzten Öffnungen (33) vorhanden sind, und wobei die Öffnungen der Frontplatte sich jeweils gegenüber den Öffnungen der Schienen (41) befinden, oder dass die Frontplatte (41) mindestens einen länglichen Schlitz aufweist.

10. Steckmodul nach einem der Ansprüche 1 bis 9, dadurch gekennzeichnet, dass die Kabel Lichtwellenleiterkabel sind.
